# EUROPEAN PATENT SPECIFICATION

(11) **EP 3 659 865 B1**
(45) Date of publication and mention of the grant of the patent: **23.09.2020**
(21) Application number: 19201832.3
(22) Date of filing: 08.10.2019
(51) Int. Cl.: B60R 9/055, B60R 9/058, F16B 2/12

(54) **SYSTEM FOR REMOVABLY FIXING A VEHICLE ROOFTOP BOX**
SYSTEM ZUR LÖSBAREN BEFESTIGUNG EINER FAHRZEUGDACHBOX
SYSTÈME DE FIXATION AMOVIBLE D'UN BOÎTIER DE TOIT DE VÉHICULE

(30) Priority: 09.10.2018 IT 201800009271
(43) Date of publication of application: 03.06.2020
(73) Proprietor: Lampa S.p.A., 46019 Viadana (MN) (IT)
(72) Inventor: MARUTTI, Giancarlo, 46019 VIADANA (MANTOVA) (IT)
(74) Representative: Monelli, Alberto

(56) References cited:
- EP-B1- 2 443 006
- EP-B1- 2 536 593
- WO-A1-2018/104684

## Description

The present invention relates to a system for removably fixing a cross-bar rooftop box for a vehicle.

Rooftop boxes for vehicles are normally intended to be placed on the roof of the passenger compartment of a motor vehicle in order to increase the load capacity of the same. They are usually applied in conjunction with specific journeys during which more space is required (e.g. a holiday); after its use, the rooftop box is detached from the vehicle. In fact, it disturbs the aerodynamics of the vehicle, penalising its consumption as well as its aesthetics. In this regard, coupling and release systems are known for the removable type of rooftop box.

They comprise a support placed inside the box and straps which protrude from the box starting from the support, embrace the cross bar placed on the roof of the vehicle and re-enter the box, fixing with the end opposite the support. Typically four removable fixing systems of this type are present. The rooftop boxes have a substantially rectangular base and each fixing system is placed near a corner zone of said rectangle. In this way two of these fixing systems embrace the front cross bar and two others embrace the rear fixing bar.

A drawback of this solution is related to the fact that the connection and removal of the rooftop box is a rather articulated operation, especially in consideration of the fact that it occurs above the roof of the vehicle's passenger compartment. Furthermore, the support placed in the rooftop box can be an obstacle to the material present in the box. EP2536593B1 discloses a system for removably fixing a cross-bar rooftop box for a vehicle, comprising gripping means comprising a gripper in turn comprising a first fixed and a second movable slider which can be moved toward and away from the first slider with respect to a first horizontal direction so as to allow the grip and release of one of said cross bars of the vehicle, a quick coupling and release lever that causes the movement of the first slider to move it closer to/away from the second slider, a structure comprising guide means for guiding the movement of the first slider, a fixing bas for fixing inside the rooftop box with which said structur can move wherein the structur is held toward the fixing base by the lever action and friction material on the fixing base.

In this context, the technical task underlying the present invention is to propose a removable fixing system that allows minimising the space the same occupies inside the rooftop box as well as the risk of accidental release due to collisions with the objects stowed in the vehicle.

A further object is linked to the speed with which the rooftop box can be applied. Another object is its maximum flexibility, being able to adapt with extreme simplicity to various cross bars generally placed on the roof of a vehicle.

The defined technical task and the specified aims are substantially achieved by a fixing system comprising the technical characteristics set forth in one or more of the appended claims.

Further characteristics and advantages of the present invention will become more apparent from the indicative and thus non-limiting description of a preferred but non-exclusive embodiment of a fixing system, as illustrated in the attached drawings, in which:

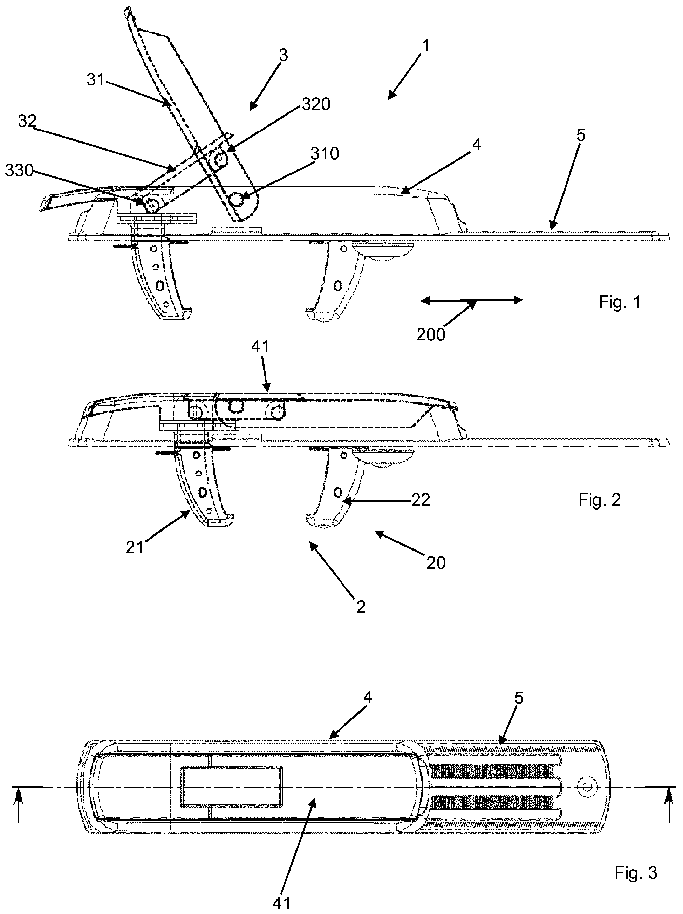

- figures 1 and 2 show two different configurations of a fixing system according to the present invention;
- figure 3 shows a view from above of the fixing system of figures 1 and 2;

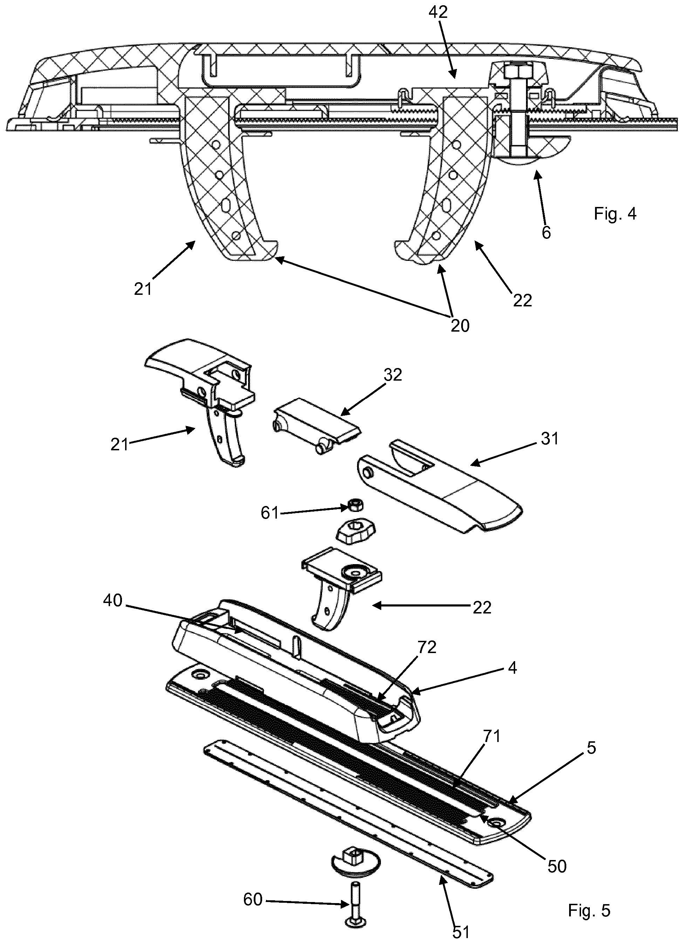

- figure 4 shows a sectional view according to the sectional plane of figure 3;
- figure 5 shows an exploded view of the fixing system of figures 1-4;
- figure 6 shows a perspective view of a fixing system according to the present invention;
- figure 7 shows a sectioned detail of the fixing system of figure 6;

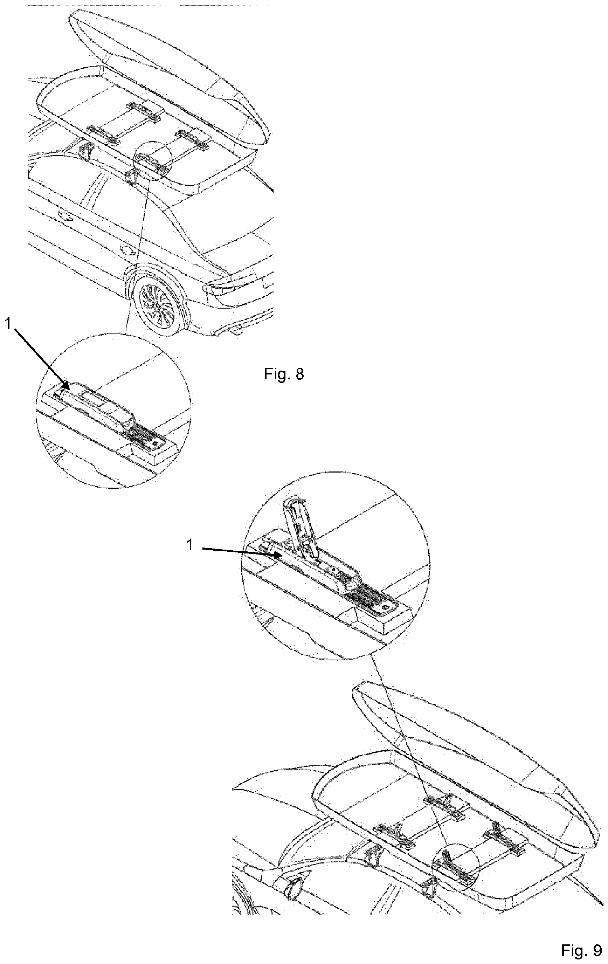

- figures 8 and 9 show a rooftop box with a fixing system highlighted according to the present invention in two distinct configurations.

In the appended figures, reference number 1 denotes a system for removably fixing a cross-bar rooftop box for a vehicle. The fixing system 1 conveniently comprises a gripping means 2. This gripping means 2 allows the connection to the cross bar located on the vehicle's roof. Conveniently, the gripping means 2 comprises a gripper 20. The gripper 20 comprises a first and a second slider 21, 22 which can be moved towards and away from each other with respect to a first direction 200 so as to allow the grip and release of one of said cross bars of the vehicle. This first direction 200 is the direction of advancement of the vehicle. This first direction 200 is therefore orthogonal to the direction of predominant extension of the bar on the roof. The first direction 200 is substantially horizontal.

The fixing system 1 comprises a quick coupling and release lever 3 that causes the movement of the first slider 21 to move it closer to/away from the second slider 22.

The quick coupling and release lever 3 preferably comprises a toggle mechanism. The lever 3 causes a movement of the first slider 21. It does not cause a movement of the second slider 22.

The first slider 21, moving closer to the second slider 22, is designed to ensure that the gripper 20 grips the cross bar. When the first slider 21 moves away from the second slider 22, it allows freeing the vehicle's cross bar. This makes it possible to remove the rooftop box.

Conveniently, the fixing system 1 comprises a structure 4 comprising guide means 40 of the first slider 21. Two fins of the first slider 21 are inserted in two corresponding grooves formed in the structure 4. The first slider 21 (if moved by the lever 3) slides with respect to the structure 4 along said grooves. The two grooves are advantageously formed on opposite sides of the first slider 21.

The structure 4 comprises an open bottom. Moreover, the structure 4 comprises two side walls. They extend along the first direction 200. The two side walls also extend between the top and the bottom. A housing 42 is defined between them. The top of this housing 42 is intended to be at least partially occluded by the lever 3.

The fixing system 1 comprises a fixing base 5 for fixing inside the rooftop box with which said structure 4 can move. It is in communication with the housing 42 since the bottom of the structure 4 is open.

The fixing base 5 can for example be connected to a wall of the rooftop box through threaded means or interlocking means or bayonet means. For example, the fixing base 5 can comprise one or more holes intended for the passage of threaded fixing means for the connection with the box. Both the first and the second slider 21, 22 comprise an arm which extends outside the structure 4, crossing the base 5 intended to come into contact with the supporting cross bar of the box and a support of said arm. This support remains inside the housing 42.

The fixing system 1 comprises clamping means 6 which lock/unlock the position along said first direction 200:
i) of said second slider 22 with respect to the structure 4; this allows it to adapt to the width along the first direction 200 of a cross bar;
ii) of said structure 4 with respect to said fixing base 5; this allows it to adapt to the distance along the first direction 200 between the two cross bars to which the box is constrained.

The action of the lever 3 is independent from that of the clamping means 6. Therefore, regardless of the position taken by the lever 3, the clamping means 6, if locked, maintains the position of the second slider 22 fixed with respect to the structure 4 and the position of the structure 4 with respect to the fixing base 5. The movement of the lever 3 does not cause a movement of the second slider 22 with respect to the structure 4, nor does a movement of the structure 4 with respect to the fixing base 5.

The clamping means 6 therefore allows memorising a predefined condition to which it is associated both with a predetermined width along the first direction 200 of a cross bar and the distance along the first direction 200 between two cross bars to which the box is constrained. The action of the lever 3 allows a quick coupling or release, but not modifying the memorisation of such a predefined condition.

In the preferred embodiment the clamping means 6 comprises a clamping screw 60 which acts transversely to said first direction 200.

The clamping screw 60 extends orthogonally to the fixing base 5. In particular, it is vertical. The clamping means 6 conveniently comprises a nut 61 which is screwed to said clamping screw 60. In one operating configuration a portion of said second slider 22, a portion of said structure 4 and a portion of the fixing base 5 are trapped between a head of the clamping screw 60 and the nut 61. This nut 61 is advantageously housed inside the structure 4 (in particular in the housing 42). Once the clamping means 6 is disconnected/loosened, the second slider 22 can be moved along the first direction 200 relative to the structure 4. Similarly once the clamping means 6 is disconnected/loosened, the structure 4 can be moved along the first direction 200 relative to the base 5. This movement takes place by manually moving the second slider 22 or the structure 4. There is no specific kinematic motion which determines its movement. The fixing base 5 is flat. The fixing base 5 conveniently has a two-dimensional extension. Thus it has a reduced thickness compared to the other two dimensions.

The fixing base 5 comprises a slot 50. In particular, the slot 50 crosses the thickness of the base 5. The slot 50 is crossed by the second slider 22. The second slider 22 is adjustable relative to the base 5 along said slot 50. The slot 50 preponderantly extends along the first direction 200.

The slot 50 is crossed by the first slider 21. The first slider 21, activated by the coupling and release lever 3, is slidable along the slot 50.

The slot 50 is a guide for the first and/or second slider 21, 22. The slot 50 can conveniently be at least partially occluded by a flexible seal 51. This seal 51 allows the passage and the eventual sliding of the first and/or second slider 21, 22, but at the same time blocks the entrance of foreign elements (such as rain) in the box (as well as the accidental exit of small objects from inside the box).

Preferably the structure 4 and the fixing base 5 comprise first, opposite gripping teeth 71 that engage to each other upon the clamping of said clamping screw 60.

The second slider 22 and said fixing base 5 comprise second, opposite gripping teeth 72 that engage to each other upon the clamping of said clamping screw 60.

The first and/or second gripping teeth 71, 72 conveniently have a sawtooth profile.

The first gripping teeth 71 extend in succession side by side along the first direction 200. The second gripping teeth 72 conveniently extend in succession side by side along the first direction 200.

Conveniently on the side opposite said fixing base 5, said lever 3 and said first slider 21 define a flat top surface 41. In a closed configuration of the gripping means 2 the top 41 is conveniently parallel to the base 5.

The lever 3 comprises a first arm 31 hinged to the structure 4. This takes place through a first hinge 310. The lever 3 also comprises a second arm 32 hinged to the first arm 31 (advantageously through a second hinge 320) and the first slider 21 (advantageously though a third hinge 330). In a configuration in which the gripping means 2 is closed (meaning it grips the cross bar), the first hinge 310 is interposed between the second and the third hinges 320, 330. In a configuration in which the gripping means 2 is at the opening stroke end, the second hinge 320 is located at a greater distance from the base 5 relative to the first and third hinges 310, 330. During an opening and closing stroke of the first slider 21, an axis of rotation of the first hinge 310 remains fixed. During an opening and closing stroke of the first slider 21, an axis of rotation of the third hinge 330 moves along the first direction 200.

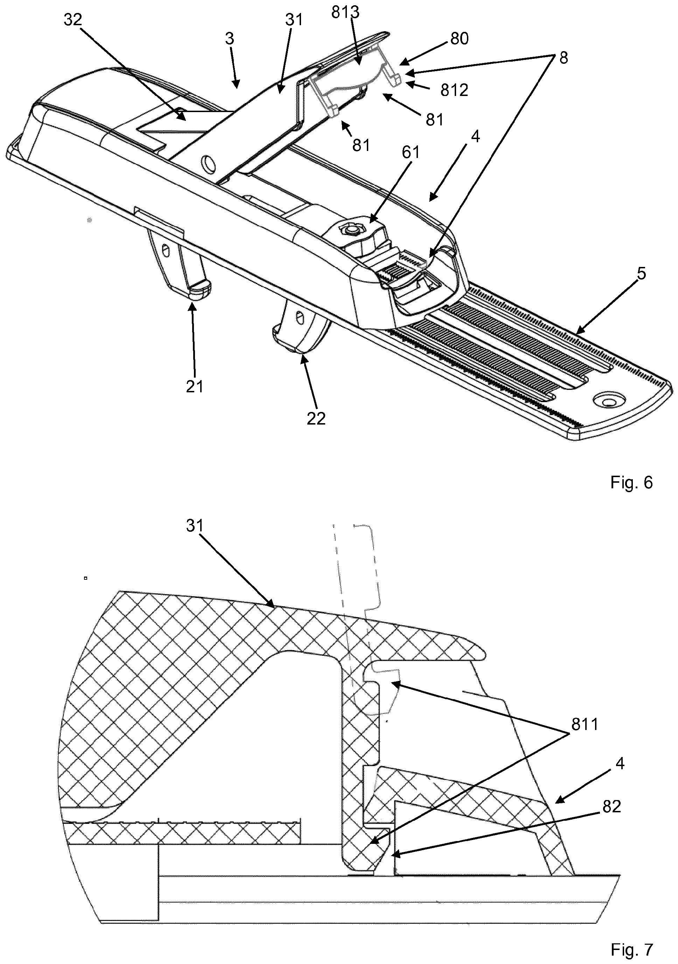

The fixing system 1 illustrated as an example in figures 6 and 7 shows a locking system 8 of the lever 3 in a clamping configuration of the gripping means 2. This is a safety measure. In fact, it serves to prevent jolts of the vehicle or an accidental overturning of the load present in the rooftop box from causing an undesired lifting of the lever 3. In this regard, the locking system 8 comprises means 80 which are elastically deformable; the lever 3 (in particular the first arm 31) and the structure 4 are mutually connected by such elastically deformable means 80. The locking system 8 comprises elastically flexible coupling means 81 rigidly coupled to the lever 3 and one or more seats 82 defined by the structure 4; the coupling means 81 are elastically connectable to said one or more seats 82. The coupling means 81 comprises an invitation that allows the insertion of such means 81 in said one or more seats 82 upon the closure of the lever 3. The coupling means 81 is located at one end of the lever 3, along a side wall. In particular, the coupling means 81 comprises two hooks 811, 812 engageable in corresponding seats 82. The two hooks 811, 812 are connected by a panel 813; a pressure on the panel 813 causes the exit of the hooks 811, 812 from the corresponding seats 82 and an unlocking of the lever 3.

An object of the present invention is also a rooftop box comprising a plurality of fixing systems 1 (preferably four) having one or more of the properties indicated above. An object of the present invention is also a vehicle comprising a front bar and a rear bar that are placed on the roof of a passenger compartment transversely to the direction of travel. A rooftop box is connected through two fixing systems to the front bar and through two fixing systems to the rear bar.

The present invention achieves important advantages.

Firstly, it allows optimising the adaptability of the fixing system to transverse bars of different widths or otherwise placed at a different distance. If also allows faster connection and release, which is very important for this type of application. Another important advantage is safety in order to prevent accidental and unwanted unlocking of the fixing system that would jeopardise road safety.

## Claims

1. A system for removably fixing a cross-bar rooftop box for a vehicle, comprising:
- gripping means (2) comprising a gripper (20) in turn comprising a first and a second slider (21, 22) which can be moved toward and away from each other with respect to a first direction (200) so as to allow the grip and release of one of said cross bars of the vehicle;
- a quick coupling and release lever (3) that causes the movement of the first slider (21) to move it closer to/away from the second slider (22);
- a structure (4) comprising guide means (40) for guiding the movement of the first slider (21);
- a fixing base (5) for fixing inside the rooftop box with which said structure (4) can move;
- clamping means (6) which, independently from the lever (3), lock/unlock the position along said first direction (200):
i) of said second slider (22) with respect to the structure in order to adapt to the width along the first direction (200) of a cross bar;
ii) of said structure (4) with respect to said fixing base (5) in order to adapt to the distance along the first direction (200) between the two cross bars to which the box is constrained.

2. The system according to claim 1, **characterised in that** said clamping means (6) comprise a clamping screw (60) which acts transversely to said first direction (200).

3. The system according to claim 2, **characterised in that** the clamping screw (60) extends orthogonally to the fixing base (5).

4. The system according to any one of the preceding claims, **characterised in that** said fixing base (5) comprises a slit (50) crossed by said second slider (22), said second slider (22) being adjustable relative to the base (5) along said slot (50).

5. The system according to claim 4, **characterised in that** the slot (50) is crossed by the first slider (21), the first slider (21), actuated by the coupling and release lever (3), is slidable along the slot (50).

6. The system according to claim 4 or 5, **characterised in that** the slot (50) is a guide for the first and/or second slider (21, 22).

7. The system according to any one of the preceding claims, **characterised in that** said structure (4) and said fixing base (5) comprise first, opposite gripping teeth (71) that engage to each other upon the clamping of said clamping means (6);
said second slider (22) and said fixing base (5) comprise second, opposite gripping teeth (72) that engage to each other upon the clamping of said clamping means (6).

8. The system according to any one of the preceding claims, **characterised in that** said quick coupling and release lever (3) comprises a toggle mechanism.

9. The system according to any one of the preceding claims, **characterised in that** on the side opposite said fixing base (5), said lever (3) and said first slider (21) define a flat top surface (41).

10. The system according to any one of the preceding claims, **characterised in that** said fixing base (5) is flat.

## Patentansprüche

1. System zur lösbaren Befestigung einer Querstangen-Dachbox für ein Fahrzeug, umfassend:
- Greifmittel (2) umfassend einen Greifer (20), der wiederum einen ersten und einen zweiten Schieber (21, 22) umfasst, die in Bezug auf eine erste Richtung (200) aufeinander hinführend und voneinander wegführend bewegt werden können, um das Greifen und Freigeben einer der Querstangen des Fahrzeugs zu ermöglichen;
- einen Schnellkupplungs- und Freigabehebel (3), der bewirkt, dass die Bewegung des ersten Schiebers (21) ihn näher an den zweiten Schieber (22) heranbewegt/von diesem weg bewegt;
- eine Struktur (4) umfassend Führungsmittel (40) zum Führen der Bewegung des ersten Schiebers (21);
- eine Befestigungsbasis (5) zur Befestigung innerhalb der Dachbox, mit der sich die Struktur (4) bewegen kann;
- Klemmmittel (6), die unabhängig vom Hebel (3) die Position entlang der ersten Richtung (200) verriegeln/entriegeln:
i) des zweiten Schiebers (22) in Bezug auf die Struktur, um sich an die Breite entlang der ersten Richtung (200) einer Querstange anzupassen;
ii) der Struktur (4) in Bezug auf die Befestigungsbasis (5), um sich an den Abstand entlang der ersten Richtung (200) zwischen den beiden Querstangen anzupassen, auf die die Box eingespannt ist.

2. System nach Anspruch 1, **dadurch gekennzeichnet, dass** die Klemmmittel (6) eine Klemmschraube (60) umfassen, die quer zur ersten Richtung (200) wirkt.

3. System nach Anspruch 2, **dadurch gekennzeichnet, dass** sich die Klemmschraube (60) orthogonal zur Befestigungsbasis (5) erstreckt.

4. System nach einem der vorhergehenden Ansprüche, **dadurch gekennzeichnet, dass** die Befestigungsbasis (5) einen Schlitz (50) umfasst, der von dem zweiten Schieber (22) gekreuzt wird, wobei der zweite Schieber (22) relativ zur Basis (5) entlang des Schlitzes (50) einstellbar ist.

5. System nach Anspruch 4, **dadurch gekennzeichnet, dass** der Schlitz (50) von dem ersten Schieber (21) gekreuzt wird, wobei der erste Schieber (21), der durch den Kupplungs- und Freigabehebel (3) betätigt wird, entlang des Schlitzes (50) verschiebbar ist.

6. System nach Anspruch 4 oder 5, **dadurch gekennzeichnet, dass** der Schlitz (50) eine Führung für den ersten und/oder zweiten Schieber (21, 22) ist.

7. System nach einem der vorhergehenden Ansprüche, **dadurch gekennzeichnet, dass** die Struktur (4) und die Befestigungsbasis (5) erste gegenüberliegende Greifzähne (71) umfassen, die nach dem Klemmen der Klemmmittel (6) ineinander greifen;
der zweite Schieber (22) und die Befestigungsbasis (5) umfassen zweite gegenüberliegende Greifzähne (72), die nach dem Klemmen der Klemmmittel (6) ineinander greifen.

8. System nach einem der vorhergehenden Ansprüche, **dadurch gekennzeichnet, dass** der Schnellkupplungs- und Freigabehebel (3) einen Kippmechanismus umfasst.

9. System nach einem der vorhergehenden Ansprüche, **dadurch gekennzeichnet, dass** auf der der Befestigungsbasis (5) gegenüberliegenden Seite der Hebel (3) und der erste Schieber (21) eine flache Oberseite (41) definieren.

10. System nach einem der vorhergehenden Ansprüche, **dadurch gekennzeichnet, dass** die Befestigungsbasis (5) flach ist.

## Revendications

1. Système de fixation amovible d'un boîtier de toit à barres transversales de véhicule, comprenant :
- des moyens de préhension (2) comprenant un préhenseur (20) comprenant à son tour un premier et un second coulisseau (21, 22) pouvant être rapprochés et éloignés l'un de l'autre par rapport à une première direction (200) de sorte à permettre la préhension et la libération d'une desdites barres transversales du véhicule ;
- un levier d'accouplement et de libération (3) rapide provoquant le déplacement du premier coulisseau (21) pour le rapprocher ou l'éloigner du second coulisseau (22) ;
- une structure (4) comprenant des moyens de guidage (40) servant à guider le déplacement du premier coulisseau (21) ;
- une base de fixation (5) servant à la fixation à l'intérieur du boîtier de toit par rapport à laquelle ladite structure (4) peut se déplacer ;
- des moyens de serrage (6) qui, indépendamment du levier (3), verrouillent/déverrouillent la position le long de ladite première direction (200) :
i) dudit second coulisseau (22) par rapport à la structure afin de s'adapter à la largeur le long de la première direction (200) d'une barre transversale ;
ii) de ladite structure (4) par rapport à ladite base de fixation (5) afin de s'adapter à la distance le long de la première direction (200) entre les deux barres transversales auxquelles le boîtier est solidaire.

2. Système selon la revendication 1, **caractérisé en ce que** lesdits moyens de serrage (6) comprennent une vis de serrage (60) agissant transversalement à ladite première direction (200).

3. Système selon la revendication 2, **caractérisé en ce que** la vis de serrage (60) se prolonge orthogonalement à la base de fixation (5).

4. Système selon l'une quelconque des revendications précédentes, **caractérisé en ce que** ladite base de fixation (5) comprend une fente (50) traversée par ledit second coulisseau (22), ledit second coulisseau (22) étant réglable par rapport à la base (5) le long de ladite fente (50).

5. Système selon la revendication 4, **caractérisé en ce que** la fente (50) est traversée par le premier coulisseau (21), le premier coulisseau (21), actionné par le levier d'accouplement et de libération (3), pouvant coulisser le long de la fente (50).

6. Système selon la revendication 4 ou 5, **caractérisé en ce que** la fente (50) est un guide pour le premier et/ou le second coulisseau (21, 22).

7. Système selon l'une quelconque des revendications précédentes, **caractérisé en ce que** ladite structure (4) et ladite base de fixation (5) comprennent des premières dents de préhension (71) opposées se mettant en prise les unes avec les autres lors du serrage desdits moyens de serrage (6) ;
ledit second coulisseau (22) et ladite base de fixation (5) comprennent des secondes dents de préhension (72) opposées se mettant en prise les unes avec les autres lors du serrage desdits moyens de serrage (6).

8. Système selon l'une quelconque des revendications précédentes, **caractérisé en ce que** ledit levier d'accouplement et de libération (3) rapide comprend un mécanisme de basculement.

9. Système selon l'une quelconque des revendications précédentes, **caractérisé en ce que** sur le côté opposé à ladite base de fixation (5), ledit levier (3) et ledit premier coulisseau (21) définissent une surface supérieure (41) plate.

10. Système selon l'une quelconque des revendications précédentes, **caractérisé en ce que** ladite base de fixation (5) est plate.
